(19) Europäisches Patentamt
European Patent Office
Office européen des brevets

(11) EP 0 543 636 B1

(12) EUROPEAN PATENT SPECIFICATION

(45) Date of publication and mention
of the grant of the patent:
**03.07.1996 Bulletin 1996/27**

(51) Int. Cl.$^6$: **B29D 24/00**, B31D 3/02,
B21D 47/00, E04C 2/36,
E04C 2/32

(21) Application number: **92310520.9**

(22) Date of filing: **18.11.1992**

(54) **Panel structure and method for producing panel**

Plattenstruktur und Verfahren zur dessen Herstellung

Structure de panneau et procédé pour sa fabrication

(84) Designated Contracting States:
**DE FR GB IT**

(30) Priority: **21.11.1991 JP 305833/91**

(43) Date of publication of application:
**26.05.1993 Bulletin 1993/21**

(73) Proprietors:
• **HITACHI, LTD.**
**Chiyoda-ku, Tokyo 100 (JP)**
• **SUMITOMO LIGHT METAL INDUSTRIES LIMITED**
**Minato-ku Tokyo (JP)**

(72) Inventors:
• **Ohara, Mamoru**
**Ikunoya, Kudamatsu-shi (JP)**
• **Hattori, Morishige**
**Kudamatsu-shi (JP)**
• **Takeichi, Michifumi**
**Kudamatsu-shi (JP)**
• **Okuto, Koichiro**
**Setagaya-ku, Tokyo (JP)**
• **Irie, Hiroshi**
**Tenpaku-ku, Nagoya-shi (JP)**

(74) Representative: **Paget, Hugh Charles Edward et al**
**MEWBURN ELLIS**
**York House**
**23 Kingsway**
**London WC2B 6HP (GB)**

(56) References cited:
EP-A- 0 117 597       EP-A- 0 167 416
FR-A-   913 070       US-A- 2 704 587
US-A- 3 068 565       US-A- 5 064 493

• **DESIGN AND DEVELOPMENT/SCANNING THE FIELD FOR IDEAS vol. 36, no. 17, 16 July 1964, pages 144 - 144 'pleats permit honeycomb flexing'**

## Description

### BACKGROUND OF THE INVENTION AND RELATED ART STATEMENT

The present invention relates to a panel and a method for producing a panel, more particularly, a light-weight panel including two surface plates and core plates extending therebetween to form inner spaces surrounded by the plates, and a method for producing the before-mentioned light-weight panel.

In a conventional method for producing a honeycomb panel as disclosed in JP-B-2-42585, a plurality of thin ribbon-shaped core members of, for example, aluminum foil, craft paper, or plastic are stacked, and the stacked core members are joined together by adhesive portions arranged separately from each other by a constant distance in a longitudinal direction of the stacked core members. Subsequently, the stacked core members are expanded in a stacked direction to form honeycomb-shaped cells of the core members. Both surfaces of this honeycomb-shaped core members are joined with respective surface plates to form a plane honeycomb panel.

When a curved honeycomb panel is necessary, the plane honeycomb panel is bent by a bending machine. Alternatively, JP-A-1-181931 and Japanese Laid-open Utility Model application Hei-2-33980 disclose methods for producing the curved honeycomb panel without using the bending process.

US-A-5064493 discloses a curved panel in which core plates which are bent in a direction perpendicular to their longitudinal and width directions extend between curved face plates. To accommodate the curvature the core plates have tapered crimps extending in the width direction.

US-A-2704587 shows a bending process for a honeycomb sandwich structure having face skins and a core of thin strips of aluminium foil bonded together to make the honeycomb cells. The hexagonal cell walls are collapsed by bending the core.

### OBJECT AND SUMMARY OF THE INVENTION

An object of the present invention is to provide a curved panel in which all of core members can extend continuously in the curved panel without being cut for curving the panel and are not deformed for curving the panel.

According to the present invention, there is provided a curved panel as set out in claim 1.

According to the present invention, there is also provided a method for producing a curved panel, as set out in claim 12.

In the present invention, since the first width-direction ends of the core plates adjacent to each other are separated from each other, the first curved surface plate can be easily bent on the first width-direction ends of the core plates so that the core plates do not need to bear a large force for holding the first curved surface plate on the first width-direction ends, and the core plates adjacent to each other do not interfere with each other when the first curved surface plate is connected to the first width-direction ends of the core plates. Therefore, all of core members can extend continuously in the curved panel without being cut for curving the panel and are not deformed for curving the panel.

### BRIEF DESCRIPTION OF THE DRAWINGS

Fig. 1 is a perspective view, partly in cross section, illustrating an embodiment of a curved-surface honeycomb panel of the present invention;

Fig. 2 is a sectional view taken along the curved line of the curved-surface honeycomb panel shown in Fig. 1;

Fig. 3 is a sectional view in which a part of the panel shown in Fig. 2 is enlarged;

Fig. 4 is a sectional view illustrating a state in which the honeycomb panel shown in Fig. 1 is manufactured; and

Fig. 5 is a sectional view illustrating another embodiment of the curved-surface honeycomb panel of the present invention.

### DESCRIPTION OF THE PREFERRED EMBODIMENTS

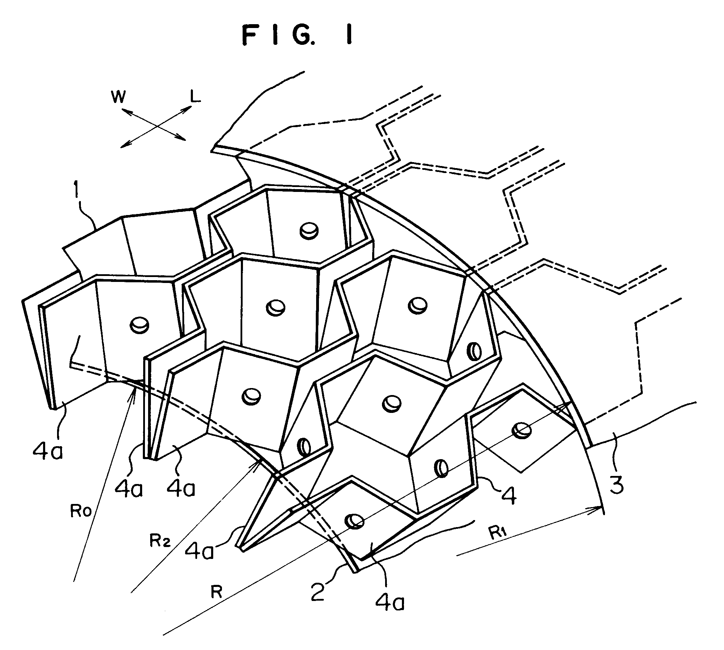

An embodiment of a construction panel of the present invention will be explained below with reference to Figs. 1, 2 and 3.

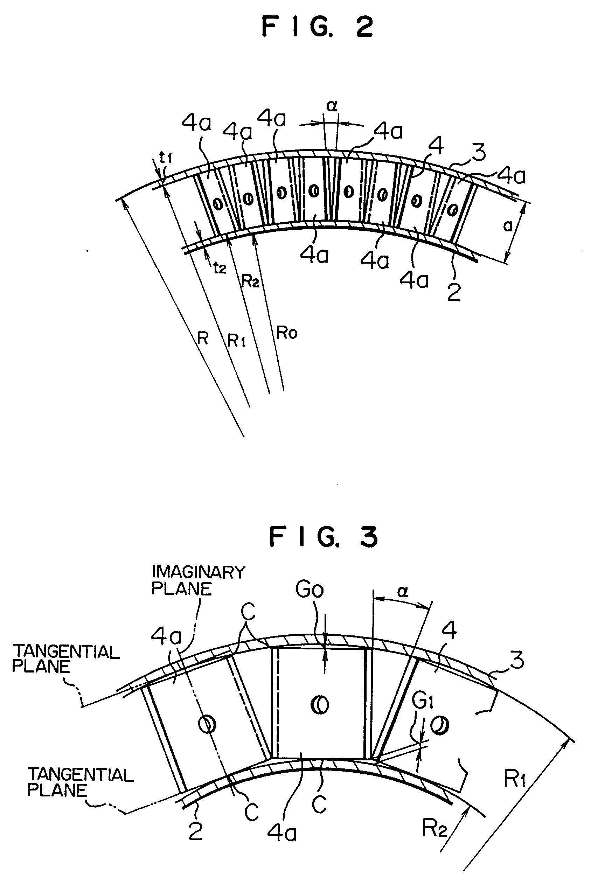

This embodiment concerns a honeycomb panel, in which both face plates and core members are made of aluminum alloys, the core forming honeycomb-shaped cells, and each of the face plates being bonded to the core member by brazing. Fig. 1 is a perspective view illustrating an embodiment of the construction panel of the present invention. Fig. 2 is a sectional view taken along a curved surface of a second-order curved surface of the honeycomb panel shown in Fig. 1. Fig. 3 is a sectional view in which the relationship between each face plate and the honeycomb core is enlarged and shown.

In Figs. 1, 2 and 3, a honeycomb panel 1 is formed in such a manner as to form a second-order curved surface as a whole. The honeycomb panel 1 is formed of a face plate 2, a face plate 3, a honeycomb core 4 arranged between the face plates 2 and 3, and a bonding agent for bonding these parts. The face plates 2 and 3 are formed in such a manner as to form a second-order curved surface in which a flat surface is formed along one direction of two directions which perpendicularly intersect each other on the surfaces of the face plates 2 and 3, and a curved surface is formed along the other direction. The face plates 2 and 3 are formed beforehand so as to have radii or curvature $R_0$ and $R_1$, respectively, by a roll forming or the like. That is, as the face plate 2 has the radius of curvature $R_0$ of the inner side of the curved surface, a radius of curvature $R_2$ of the outer side of the curved surface is the sum of a plate thickness $t_2$ of the face plate 2 and the radius of curvature $R_0$. The radius of curvature $R_1$ of the inner side of the curved surface of the face plate 3 is the sum of a thickness "a" of the honeycomb core 4 and the radius of curvature $R_2$. A radius of curvature R of the outer side of the curved surface is the sum of a plate thickness $t_1$ of the face plate 3 and the radius of curvature $R_1$. The honeycomb core 4 is formed of a plurality of core members 4a which have previously been folded so as to form alternate trapezoids which are formed by dividing a thin ribbon-shaped honeycomb plate into two. The adjacent core members 4a are arranged in such a way that the portions of short sides of each of the trapezoids are back to back. The honeycomb core 4 formed by arranging a plurality of core members 4a in this way, is positioned in such a way that the core members 4a contact the inner side of the curved surface of the face plate 3. The core members 4a are arranged in such a way that the longitudinal direction thereof, i.e., the L direction of the honeycomb core 4, forms a flat direction of the second-order curved surface of the face plate 2 or 3. Also, each of the core members 4a on the face plate 3 is arranged in such a way that a direction at right angles to the thickness of face plate 3, i.e., the width direction is substantially at right angles to the surface of the face plate 3. Therefore, portions C where the core members 4a contact the face plate 3 form the short sides of trapezoid portions of the core members 4a. Portions C where the core members 4a contact the face plate 2 form the central portion of the inclined sides of both sides of the trapezoid portions of the core members 4a. Gaps are formed in portions near the face plate 3 in the sections between the adjacent untreated core members 4a, and the face plate 2 is contacted in the short sides of each of the respective trapezoid portions. That is, the core members 4a are arranged in such a way that gaps formed between the adjacent core members 4a in a portion toward the face plate 2 are different from those in a portion toward the face plate 3. Alternatively, the adjacent core members 4a may be connected to each other on the face plate 2. The following relation (1) between an angle $\alpha$ between each pair of the adjacent core members 4a and the radius of curvature R of the face plate 3 is satisfied:

$$R = \frac{a}{2 \sin e \alpha} \left( 0 \leq \alpha \leq \sin^{-1}\left(\frac{a}{2R_0}\right) \right) \qquad (1)$$

When, for example, the radius of curvature R is 500 mm, the thickness "a" of the honeycomb core 4 is 30 mm, and the size of the core is 3/4 inch, a gap $G_0$ between the central portion of the inclined side of the trapezoid portion of the core members 4a and the surface on the inner side of the face plate 3 is approximately 0.04 mm. A gap $G_1$ between the short side of the trapezoid portion of the core members 4a and the surface on the outer side of the face plate 2 is approximately 0.03 mm. When brazing materials for bonding the face plates 2 and 3, and the core members 4a are made of aluminum alloys, it has been shown empirically that the above components can be bonded without any trouble if the size of each of the gaps $G_0$ and $G_1$ is approximately 0.1 mm or smaller. When each face plate and the honeycomb core are made of aluminum alloys, resins or paper, and when these are bonded by a bonding agent made of resins, even if the size of the gaps $G_0$ and $G_1$ is wider than that stated above, no problem is posed if the bonding agent is placed in the gaps in the form of a gentle arc.

In an example in which the honeycomb panel 1 is formed from an aluminum alloy, the face plates 2 and 3 having a thickness from 1.0 mm or thereabouts to approximately 2, 3 mm are used, and the core members 4a having a thickness from 0.2 mm to approximately 2, 3 mm are used. In this embodiment, the thickness of the face plate 3 is greater than that of the face plate 2.

With the construction described above, the manufacturing method of this embodiment will be explained in detail. First, the face plates 2 and 3 are formed into second-order curved surfaces having predetermined radii of curvature $R_0$ and $R_1$, respectively, by a roll or the like. However, the forming need not to be performed beforehand depending upon conditions, for example, in the case where the face plate is thin and the radius of curvature thereof is relatively large, becaues the face plate flexes due to its self-weight. However, forming beforehand is advantageous over a case in which no forming is performed beforehand from a point of view of increasing the accuracy of manufacturing panels and workability. When core members are not formed beforehand, these are formed by pressing them by dies 10 and 20. A brazing material is pressed by rolling against the inner side of the panel of the face plates 2 and 3, i.e., the surface facing the honeycomb core 4. In the core members 4a, a thin plate on which a brazing material is clad by rolling is cut in the form of a ribbon and in turn folded in the shape of a trapezoid in which a honeycomb shape is divided into two. The components which form the panel are manufactured in the above-described way, and these components are bonded to manufacture a panel as described below.

First, the face plate 3 is placed on a lower die 10 with a friction reducing material therebetween, for example, a carbon sheet 11. Next, the plurality of core members 4a are placed on the face plate 3 with the short sides of respective trapezoid portions being back to back. When positioning respective core members 4a, a wire member is passed through a plurality of vacuum exhaust slots on the core members 4a across the core members 4a to make operations relatively easy. The passing of the wire material through the vacuum exhaust slots on the core members 4a permits positioning between the core members 4a to be performed accurately and reliably. The wire member is removed at a proper stage at which the panel is manufactured. The above respective positionings can be performed by inserting a spacer into the gaps between the adjacent core members 4a.

By performing the operation for arranging the core members 4a in this way, the core members 4a can be arranged at correct positions. The angle between each pair of core members 4a can be set at a predetermined angle α. Also, predetermined gaps can be formed between the adjacent core members 4a in the area near the face plate 3, and the honeycomb panel can be arranged in such a way that the core members 4a in the area near the face plate 2 are contacted. In this condition, the face plate 2 is placed on each of the core members 4a. An upper die 20 is placed on the face plate 2 with a friction reducing material 12 therebetween. In this condition, the area surrounding the panel components is made into a vacuum while heating it, and is pressurized by the lower die 10 and upper die 20.

Brazing clad on the surface of the face plates 2 and 3 and the core members 4a melts by heating and enters the gaps in the contact portions of the members. If the panel components are cooled in this condition, the face plates 2 and 3 are bonded to the core members 4a, and the core members 4a are bonded to each other by the brazing. In this way, the honeycomb panel 1 is completed.

The honeycomb core 4 is formed in such a way that gaps are formed between the core members 4a near the face plate 3 and a portion of the face plate 2 is contacted. More specifically, in the honeycomb core 4, the size of the gaps formed between the adjacent core members 4a in the area near the face plate 3 are different from those gaps in the area near the face plate 2. Therefore, the area where the honeycomb core 4 contacts the face plates 2 and 3 can be formed in such a manner as to be along the second-order curved surface of each of the face plates. Since the honeycomb core 4 constructed as described above is bonded to the face plates 2 and 3, no deformation is caused in the honeycomb core 4, and the face plates 2 and 3. As a result, no defects occur in the bonded portions of the honeycomb core 4 and the face plates 2 and 3, and a uniform strength can be obtained when the honeycomb panel is completed. A curved surface having a relatively small radius of curvature two or three times to approximately 200 or 300 times the thickness of the panel can be formed in the honeycomb panel 1 formed of the honeycomb core 4 and the face plates 2 and 3. In addition, since the adjacent core members 4a contact the honeycomb core 4 on the portion of the face plate 2, the core members 4a can be bonded in succession. Thus, the strength of the honeycomb panel 1 can be satisfactorily secured.

According to the method of manufacturing the honeycomb panel 1, the face plate 3, the core members 4a, and the face plate 2 are in turn placed on the lower die 10 and only need to be pressurized by the upper die 20 from above. Unlike the prior art, special machining, such as forming grooves, need not to be performed. Since the face plate 2, the core members 4a, and the face plate 3 are bonded by using the lower die 10 and the upper die 20, a plurality of honeycomb panels 1 can be manufactured into uniform shapes. Since the honeycomb panel 1 is manufactured by using the lower die 10 and upper die 20, strains caused on the surfaces of the face plates 2 and 3 can be minimized.

In addition, when the core members 4a are placed on the face plate 3, the adjacent core members 4a can be placed while confirming the positions thereof, thereby permitting each of the core members 4a to be placed accurately with respect to the face plates 2 and 3. Therefore, according to this manufacturing method, the core members 4a can be prevented from being deformed, defects of the portions where the core members 4a are bonded to the face plates 2 and 3 can be prevented, thereby ensuring a satisfactory strength for the honeycomb panel 1 in its entirety. That is, since the face plates 2 and 3, and the core members 4a are positioned independently of each other, no unnecessary external force is exerted upon them. These components which form the panel are bonded to each other in a state in which these are not deformed or a minimum amount of deformation is caused therein. Therefore, when an external form is exerted upon the honeycomb panel 1, the external force is burdened efficiently by each of the components which form the panel in a condition in which the panel is completed. As a result, no local stress concentration is caused in the honeycomb panel 1, making it possible to make the strength uniform. This results in an improvement in the strength of the entire honeycomb panel 1.

Since the honeycomb panel 1 is manufactured by in turn combining the face plate 2, the face plate 3 and the untreated core members 4a, the radius of curvature of the panel itself can be determined at will be merely selecting the radii of curvature of the lower die 10 and the upper die 20. Determination of the radius of curvature of the honeycomb panel 1 is not limited by the components or the manufacturing method. Only the angle α between each pair of adjacent untreated core members differs in the honeycomb panels, the radii of which only are different. There is not difference in terms of the construction, and there is no extreme difference in strength and rigidity.

However, it is necessary to select the cell size of the honeycomb panel 1, the radius of curvature of the panel, and the thickness "a" of the honeycomb core 4 so that gaps formed between the adjacent core members 4a near the face plate 3 does not become large and so that the angle α between each pari of adjacent core members 4a does not become extremely large. However, no particular problem is posed since the gaps between each pair of adjacent core members 4a are always narrower than the largest gap of the cell portion of the honeycomb core 4 in the honey comb panel 1.

The honeycomb panel 1 can be manufactured as follows: the face plate 2, the plurality of core members 4a, and the face plate 3 are in turn placed on the lower die 10 while the face plates 2 and 3 are being positioned so that at least their second-order curved surfaces become concentric, and the upper die 20 is placed on the face plate 3, and heated in a vacuum. According to this manufacturing method, a smaller number of operation steps are required in comparison with a conventional method in which only the core is manufactured whereas untreated core members are bonded to each other in another step. Therefore, heating components which form the panel in a vacuum according to this manufacturing method only need to be performed once. In addition, no particularly complex operations are needed for the operation for positioning the components of the panel by forming the face plates 2 and 3 into second-order curved surfaces beforehand, therefore the method is easy.

The honeycomb panel 1 is arranged so that the second-order curved surfaces of the face plates 2 and 3 become concentric to each other. However, it is also possible to manufacture the honeycomb panel in such a way that second-order curved surfaces of the face plates 2 and 3 are formed the same, and the central position of each of the face plates 2 and 3 is arranged deviated by a dimension corresponding to the thickness of the honeycomb core. In addition, the honeycomb panel can also be manufactured by making the radii of curvature of two face plates the same or changed slightly so as to deviate the central position. In such a case, although the honeycomb core does not intersect perpendicularly to the surface of the face plate, no problem is caused in terms of strength if the inclination is small.

In addition, the radius of curvature of the second-order curved surface of each of the face plates is not limited to a single value, but a second-order curved surface having a plurality of radii of curvature may be formed. In the honeycomb panel formed from these face plates, the gaps between the adjacent core members 4a of the honeycomb core have dimensions different in correspondence with the changes in the radius of curvature along the curved surface of the panel.

If the core members are arranged in agreement with the normal line of the second-order curved surface of the face plate and thus the honeycomb panel is formed, the core members are arranged without contact. In the honeycomb panel constructed in this way, the core members are arranged at positions accurately at right angles to the face plate, and the core members are not easily deformed by an external force. Therefore, the strength and rigidity of the honeycomb panel can be increased.

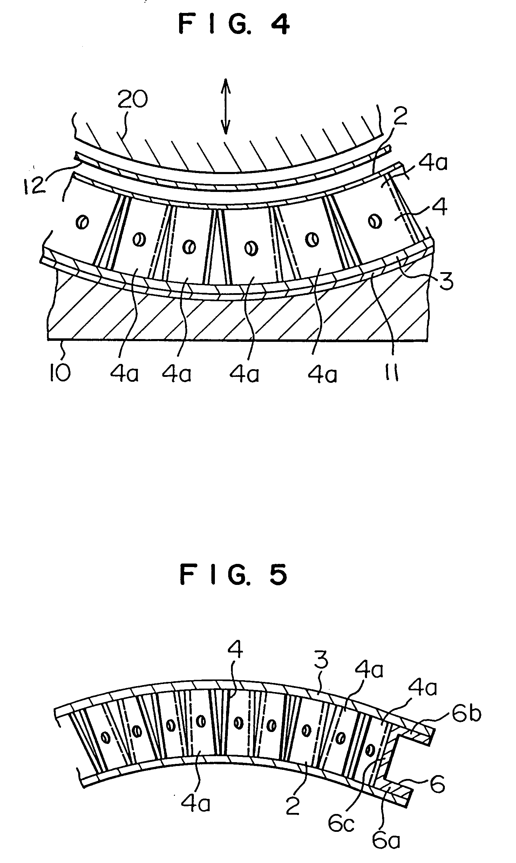

Even though the lower die 10 and the upper die 20 are downwardly projected in the above-mentioned manufacturing method as shown in Fig. 4, when each of the face plates is bonded to the core members by a brazing material made of an aluminum alloy, each die is preferred to upwardly project. This is because the brazing material made of an aluminum alloy melts and flows along the outer periphery of the honeycomb panel, thus uniform brazing can be performed in the entirety of the panel. A problem, for example, corrosion of a thin core member which occurs when the brazing material collects in a narrow range, is not caused.

Next, another embodiment of the present invention will be explained with reference to Fig. 5. The same reference numerals in Fig. 5 as in the above-described embodiment represent the same members. Reference numeral 6 denotes an end member, provided in the edge of the panel, which serves as a joint when the panel is bonded to another member. The end member 6 is bonded to the face plates 2 and 3 and the honeycomb core 4 by soldering. The end member 6, in its cross section, is formed of flanges 6a and 6b bonded to the face plates 2 and 3, respectively, and a wab 6c bonded to the honeycomb core 4. The angle between the end member 6 and the core members 4a of the honeycomb core 4 may be set at an angle $\alpha$ in the same manner as in the above-described embodiment. However, when a force is transmitted from this honeycomb panel to other members via the end member 6, an arrangement in which the end member 6 is arranged in the straight line portions of the face plates 2 and 3 without providing the angle $\alpha$ as shown is more advantageous in terms of strength. That is, since the honeycomb core 4 is bonded to the end member 6 in the portion of the web 6c, force can be transmitted in a spread manner among the end member 6, the face plates 2 and 3, and the honeycomb core 4. As a result, deformation, such as buckling, in consequence of stress concentration can be prevented in portions of the face plates 2 and 3 near the end member 6. This increases the rigidity of the panel as a whole, and the panel may be light-weight as the thickness of each member is made thinner.

Even though an example in which the core members 4a are formed into a trapezoid shape in which a honeycomb shape, i.e., a hexagonal shape, is divided into two, has been explained in the above-described embodiment, the present invention is not limited to this example. The same effect as above can be achieved if the core members are formed into other continuous shape, such as a rectangular shape. Although an example in which a single second-order curved surface is formed on the panel has been explained in the above-described embodiment, a panal having a waveform cross section may also be formed by continuously forming the curved surface of the second-order curved surface sequentially in an opposite direction.

According to the present invention, a plurality of core members are arranged between face plates having concentric second-order curved surfaces in such a way that one of them is contacted and the other is separated. Thus, a curved-surface honeycomb panel having a relatively small radius of curvature and a uniform strength can be formed.

In addition, according to the present invention, a face plate, a plurality of core members, and a face plate are in turn placed on a forming die, and pressurized and bonded to each other. As a result, a honeycomb panel can be manufactured easily without requiring complex operations.

## Claims

1. A curved panel comprising,

a first curved surface plate (3) at a radially outer side thereof, a second curved surface plate (2) at a radially inner side thereof and a plurality of core plates (4a) each of which has a first width-direction end connected to the first curved surface plate (3) and a second width-direction end connected to the second curved surface plate (2), and is bent in a direction substantially perpendicular to the width-direction and longitudinal-direction of the core plate to form an array of waves arranged in the longitudinal-direction, characterized in that the first width-direction ends of the core plates (4a) adjacent to each other are separated from each other.

2. A curved panel according to claim 1, wherein the distance along the first curved surface plate (3) between the first width-direction ends of the core plates (4a) adjacent to each other is larger than the distance along the second curved surface plate (2) between the second width-direction ends of the adjacent core plates.

3. A curved panel according to claim 1 or 2, wherein the second width-direction ends of the core plates (4a) adjacent to each other are separated from each other.

4. A curved panel according to claim 1 or 2, wherein the second width-direction ends of the core plates (4a) adjacent to each other are joined with each other.

5. A curved panel according to any one of claims 1 to 4, wherein at least one of the first curved surface plate (3) and the second curved surface plate (2) extends substantially straight in a direction on which the longitudinal-direction of at least one of the core plates (4a) is arranged.

6. A curved panel according to any one of claims 1 to 5, wherein an imaginary face extending substantially parallel to the width direction to divide each of the core plates in the longitudinal-direction into two substantially equal parts passes a point on one of the first curved surface plate (3) and the second curved surface (2) plate and is arranged on a plane substantially perpendicular to a tangential plane of the point.

7. A curved panel according to any one of claims 1 to 5, wherein an imaginary face extending substantially parallel to the width direction to divide each of the core plates in the longitudinal-direction into two substantially equal parts passes a first point on the first curved surface plate, is arranged on a first plane substantially perpendicular to a first tangential plane of the first point, passes a second point on the second curved surface plate and is arranged on a second plane substantially perpendicular to a second tangential plane of the second point.

8. A curved panel according to any one of claims 1 to 7, wherein a difference between the curvature radius of the first curved surface plate (3) and the curvature radius of the second curved surface plate (2) is substantially equal to the width of the core plates (4a).

9. A curved panel according to any one of claims 1 to 8, wherein the waves of the core plates (4a) form a plurality of trapezoids.

10. A curved panel according to any one of claims 1 to 9, wherein the curved panel further comprises an end member (6) at an edge thereof, the end member joined with the first and second curved surface plates and at least one of the core plates.

11. A curved panel according to any one of claims 1 to 9, wherein the curved panel further comprises an end member (6) at a planar portion thereof, the end member joined with the first and second curved surface plates and at least one of the core plates.

12. A method for producing a curved panel, comprising, the steps of:
positioning between a first curved surface plate (3) at a radially outer side of the curved panel and a second curved surface plate (2) at a radially inner side of the curved panel a plurality of core plates (4a) each of which has a first width-direction end to be connected to the first curved surface plate and a second width-direction end to be connected to the second curved surface plate, and is bent in a direction substantially perpendicular to the width-direction and longitudinal-direction of core plate to form an array of waves arranged in the longitudinal-direction, and
fixing the core plates (4a) to the first curved surface plate (3) and the second curved surface plate (2) so that the first width-direction ends are fixed to the first curved surface plate and the second width-direction ends are fixed to the second curved surface plate, characterized in that when the core plates are fixed the first width-direction ends of the core plates adjacent to each other are separated from each other.

13. A method according to claim 12, wherein the second width-direction ends of the core plates (4a) adjacent to each other are joined with each other before the positioning step.

14. A method according to claim 12 or 13, wherein a curvature of at least one of the first curved surface plate (3) and the second curved surface plate (2) is formed before the positioning step.

15. A method according to any one of claims 12 to 14, wherein the core plates (4a) are fixed to the first curved surface plate (3) and the second curved surface plate (2) by a brazing process.

**16.** A method according to any one of claims 12 to 14, wherein the core plates are fixed to the first curved surface plate and the second curves surface plate by a brazing process when a brazed portion of the curved panel is vertically higher than the other portion of curved panel adjacent to the brazed portion.

**17.** A method according to any one of claims 12 to 14, wherein the core plates are fixed to the first curved surface plate (3) and the second curved surface plate (2) by a brazing process when the first curved surface plate is arranged vertically higher than the second curved surface plate.

**Patentansprüche**

**1.** Gekrümmte Füllwand enthaltend:
eine erste gekrümmte Oberflächenplatte (3) an einer radialen Außenseite von dieser, eine zweite gekrümmte Oberflächenplatte (2) an einer radialen Innenseite von dieser und mehrere Kernplatten (4a), deren jede ein erstes in Breitenrichtung liegendes, mit der ersten gekrümmten Oberflächenplatte (3) verbundenes Ende, und ein zweites in Breitenrichtung liegendes, mit der zweiten gekrümmten Oberflächenplatte (2) verbundenes Ende aufweist, und in einer im wesentlichen zur Breitenrichtung und zur Längsrichtung der Kernplatte senkrechten Richtung gebogen ist, so daß eine in Längsrichtung angeordnete Wellenmatrix gebildet wird,
**dadurch gekennzeichnet**, daß
die ersten in Breitenrichtung liegenden Enden der einander benachbarten Kernplatten (4a) voneinander getrennt sind.

**2.** Gekrümmte Füllwand nach Anspruch 1, bei welcher der Abstand zwischen den ersten in Breitenrichtung liegenden Enden der zueinander benachbarten Kernplatten (4a) entlang der ersten gekrümmten Oberflächenplatte (3) größer ist als der Abstand zwischen den zweiten in Breitenrichtung liegenden Enden der benachbarten Kernplatten entlang der zweiten gekrümmten Oberflächenplatte (2).

**3.** Gekrümmte Füllwand nach Anspruch 1 oder 2, bei welcher die zweiten in Breitenrichtung liegenden Enden der zueinander benachbarten Kernplatten (4a) voneinander getrennt sind.

**4.** Gekrümmte Füllwand nach Anspruch 1 oder 2, bei welcher die zweiten in Breitenrichtung liegenden Enden der zueinander benachbarten Kernplatten (4a) miteinander verbunden sind.

**5.** Gekrümmte Füllwand nach einem der Ansprüche 1 bis 4, bei welcher sich wenigstens eine aus der ersten gekrümmten Oberflächenplatte (3) und der zweiten gekrümmten Oberflächenplatte (2) im wesentlichen gerade in eine Richtung erstreckt, in der die Längsrichtung wenigstens einer der Kernplatten (4a) angeordnet ist.

**6.** Gekrümmte Füllwand nach einem der Ansprüche 1 bis 5, bei welcher eine sich zum Trennen einer jeden der Kernplatten in Längsrichtung in zwei im wesentlichen gleiche Teile im wesentlichen parallel zur Breitenrichtung erstreckende gedachte Außenfläche an einem Punkt auf der ersten gekrümmten Oberflächenplatte (3) oder der zweiten gekrümmten Oberflächenplatte (2) vorbeiläuft und auf einer zu einer Tangentialebene des Punktes im wesentlichen senkrechten Ebene angeordnet ist.

**7.** Gekrümmte Füllwand nach einem der Ansprüche 1 bis 5, bei welcher eine sich zum Trennen einer jeden der Kernplatten in Längsrichtung in zwei im wesentlichen gleiche Teile im wesentlichen parallel zur Breitenrichtung erstreckende gedachte Außenfläche an einem Punkt auf der ersten gekrümmten Oberflächenplatte vorbeiläuft, auf einer zu einer ersten Tangentialebene des ersten Punktes im wesentlichen senkrechten ersten Ebene angeordnet ist, an einem zweiten Punkt auf der zweiten gekrümmten Oberflächenplatte vorbeiläuft und auf einer zweiten zu einer zweiten Tangentialebene des zweiten Punktes im wesentlichen senkrechten Ebene angeordnet ist.

**8.** Gekrümmte Füllwand nach einem der Ansprüche 1 bis 7, bei welcher eine Differenz zwischen dem Krümmungsradius der ersten gekrümmten Oberflächenplatte (3) und dem Krümmungsradius der zweiten gekrümmten Oberflächenplatte (2) im wesentlichen der Breite der Kernplatten (4a) gleicht.

**9.** Gekrümmte Füllwand nach einem der Ansprüche 1 bis 8, bei welcher die Wellen der Kernplatten (4a) mehrere Trapezoide bilden.

**10.** Gekrümmte Füllwand nach einen der Ansprüche 1 bis 9, bei welcher die gekrümmte Füllwand weiterhin ein Endelement (6) an einer ihrer Kanten aufweist, wobei das Endelement mit der ersten und der zweiten gekrümmten Oberflächenplatte und wenigstens einer der Kernplatten verbunden ist.

**11.** Gekrümmte Füllwand nach einem der Ansprüche 1 bis 9, bei welcher die gekrümmte Füllwand weiterhin ein Endelement (6) in einem ebenen Bereich aufweist, wobei das Endelement mit der ersten und der zweiten gekrümmten Oberflächenplatte und wenigstens einer der Kernplatten verbunden ist.

**12.** Verfahren zum Herstellen einer gekrümmten Füllwand, enthaltend die Schritte:
Positionieren mehrerer Kernplatten (4a) zwischen einer ersten gekrümmten Oberflächenplatte (3) an einer radialen Außenseite der gekrümmten Füllwand und einer zweiten gekrümmten Oberflächenplatte (2) an einer radialen Innenseite der gekrümmten Füllwand, wobei jede der Kernplatten (4a) ein erstes in Breitenrichtung liegendes, mit der ersten gekrümmten Oberflächenplatte zu verbindendes Ende und ein zweites in Breitenrichtung liegendes, mit der zweiten gekrümmten Oberflächenplatte zu verbindendes Ende aufweist und in einer zur Breitenrichtung und Längsrichtung der Kernplatte im wesentlichen senkrechten Richtung gebogen ist, so daß eine Matrix von in Längsrichtung angeordneten Wellen gebildet wird, und

    Befestigen der Kernplatten (4a) an der ersten gekrümmten Oberflächenplatte (3) und der zweiten gekrümmten Oberflächenplatte (2), so daß die ersten in Breitenrichtung liegenden Enden an der ersten gekrümmten Oberflächenplatte befestigt werden und die zweiten in Breitenrichtung liegenden Enden an der zweiten gekrümmten Oberflächenplatte befestigt werden,

    **dadurch gekennzeichnet**, daß die ersten in Breitenrichtung liegenden Enden der aneinander angrenzenden Kernplatten voneinander getrennt werden, wenn die Kernplatten befestigt werden.

13. Verfahren nach Anspruch 12, bei welchem die zweiten in Breitenrichtung liegenden Enden der aneinander angrenzenden Kernplatten (4a) vor dem Schritt des Positionierens miteinander verbunden werden.

14. Verfahren nach Anspruch 12 oder 13, bei welchem eine Krümmung wenigstens einer aus der ersten gekrümmten Oberflächenplatte (3) und der zweiten gekrümmten Oberflächenplatte (2) vor dem Schritt des Positionierens gebildet wird.

15. Verfahren nach einem der Ansprüche 12 bis 14, bei welchem die Kernplatten (4a) durch einen Lötvorgang an der ersten gekrümmten Oberflächenplatte (3) und der zweiten gekrümmten Oberflächenplatte (2) befestigt werden.

16. Verfahren nach einem der Ansprüche 12 bis 14, bei welchem die Kernplatten durch einen Lötvorgang an der ersten gekrümmten Oberflächenplatte und der zweiten gekrümmten Oberflächenplatte befestigt werden, wenn ein gelöteter Bereich der gekrümmten Füllwand in der senkrechten Richtung höher ist als der dem gelöteten Bereich benachbarte andere Bereich der gekrümmten Füllwand.

17. Verfahren nach einem der Ansprüche 12 bis 14, bei welchem die Kernplatten durch einen Lötvorgang an der ersten gekrümmten Oberflächenplatte (3) und der zweiten gekrümmten Oberflächenplatte (2) befestigt werden, wenn die erste gekrümmte Oberflächenplatte in der senkrechten Richtung höher angeordnet ist als die zweite gekrümmte Oberflächenplatte.

## Revendications

1. Panneau courbe comprenant une première plaque de surface courbe (3) située sur un côté du panneau, extérieur du point de vue radial, une seconde plaque de surface courbe (2) située sur un côté du panneau, intérieur du point de vue radial, une pluralité de plaques de noyau (4a) dont chacune possède une première extrémité dans le sens de la largeur, connectée à la première plaque de surface courbe (3) et une seconde extrémité dans le sens de la largeur, connectée à la seconde plaque de surface courbe (2), et est cintrée dans une direction sensiblement perpendiculaire au sens de la largeur et à la direction longitudinale de la plaque de noyau pour former un réseau d'ondulations disposé dans la direction longitudinale, caractérisé en ce que les premières extrémités dans le sens de la largeur des plaques de noyau (4a), voisines les unes des autres, sont séparées les unes des autres.

2. Panneau courbe selon la revendication 1, dans lequel la distance le long de la première plaque de surface courbe (3) entre les premières extrémités dans le sens de la largeur des plaques de noyau (4a) voisines les unes des autres est supérieure à la distance le long de la seconde plaque de surface courbe (2) entre les secondes extrémités dans le sens de la largeur des plaques de noyau voisines.

3. Panneau courbe selon la revendication 1 ou 2, dans lequel les secondes extrémités dans le sens de la largeur des plaques de noyau (4a), voisines les unes des autres, sont séparées les unes des autres.

4. Panneau courbe selon la revendication 1 ou 2, dans lequel les secondes extrémités dans le sens de la largeur des plaques de noyau (4a), voisines les unes des autres, sont réunies entre elles.

5. Panneau courbe selon l'une quelconque des revendications 1 à 4, dans lequel la première plaque de surface courbe (3) et/ou la seconde plaque de surface courbe (2) s'étendent avec une forme essentiellement rectiligne dans une direction avec laquelle est confondue la direction longitudinale d'au moins l'une des plaques de noyau (4a).

6. Panneau courbe selon l'une quelconque des revendications 1 à 5, dans lequel une face imaginaire, qui s'étend sensiblement parallèlement au sens de la largeur pour diviser chacune des plaques de noyau dans la direction longitudinale en deux parties sensiblement égales, passe par un point situé sur la première plaque de surface courbe (3) ou sur la seconde plaque de surface courbe (2) et est disposée dans un plan sensiblement perpendiculaire à un plan tangent passant par ce point.

7. Panneau courbe selon l'une quelconque des revendications 1 à 5, dans lequel une face imaginaire, qui s'étend sensiblement parallèlement au sens de la largeur pour diviser chacune des plaques de noyau dans la direction longitudinale en deux parties sensiblement égales, passe par un premier point situé sur la première plaque de surface courbe, est disposée dans un premier plan sensiblement perpendiculaire à un premier plan tangent passant par le premier point, passe par un second point situé sur la seconde plaque de surface courbe et est disposée dans un second plan sensiblement perpendiculaire à un second plan tangent passant par le second point.

8. Panneau courbe selon l'une quelconque des revendications 1 à 7, dans lequel une différence entre le rayon de courbure de la première plaque de surface courbe (3) et le rayon de courbure de la seconde plaque de surface courbe (2) est sensiblement égale à la largeur des plaques de noyau (4a).

9. Panneau courbe selon l'une quelconque des revendications 1 à 8, dans lequel les ondulations des plaques de noyau (4a) forment une pluralité de trapèzes.

10. Panneau courbe selon l'une quelconque des revendications 1 à 9, dans lequel le panneau courbe comprend en outre un élément d'extrémité (6) à l'un de ses bords, l'élément d'extrémité étant réuni aux première et seconde plaques de surface courbes et à au moins l'une des plaques de noyau.

11. Panneau courbe selon l'une quelconque des revendications 1 à 9, dans lequel le panneau courbe comporte en outre un élément d'extrémité (6) dans l'une de ses parties planes, cet élément d'extrémité étant réuni aux première et seconde plaques de surface courbes et à au moins l'une des plaques de noyau.

12. Procédé pour fabriquer un panneau courbe comprenant les étapes consistant à :
positionner entre une première plaque de surface courbe (3), sur un côté extérieur du point de vue radial du panneau courbe, une seconde plaque de surface courbe (2), sur un côté intérieur du point de vue radial du panneau courbe, une pluralité de plaques de noyau (4a) dont chacune possède une première extrémité dans le sens de la largeur, destinée à être raccordée à la première plaque de surface courbe, et une seconde extrémité dans le sens de la largeur, destinée à être raccordée à la seconde plaque de surface courbe, et est cintrée dans une direction sensiblement perpendiculaire au sens de la direction de la largeur et à la direction longitudinale de la plaque de noyau pour former un réseau d'ondulations disposé dans la direction longitudinale, et
fixer les plaques de noyau (4a) à la première plaque de surface courbe (3) et à la seconde plaque de surface courbe (2) de telle sorte que les premières extrémités dans le sens de la largeur sont fixées à la première plaque de surface courbe et que les secondes extrémités dans le sens de la largeur sont fixées à la seconde plaque de surface courbe, caractérisé en ce qu'on fixe les plaques de noyau de telle sorte que les premières extrémités dans le sens de la largeur des plaques de noyau voisines les unes des autres, sont séparées les unes des autres.

13. Procédé selon la revendication 12, dans lequel on réunit entre elles avant l'étape de positionnement les secondes extrémités dans le sens de la largeur des plaques de noyau (4a) voisines les unes des autres.

14. Procédé selon la revendication 12 ou 13, dans lequel on réalise un cintrage de la première plaque de surface courbe (3) et/ou de la seconde plaque de surface courbe (2) avant l'étape de positionnement.

15. Procédé selon l'une quelconque des revendications 12 à 14, dans lequel on fixe les plaques de noyau (4a) à la première plaque de surface courbe (3) et à la seconde plaque de surface courbe (2) au moyen d'un processus de brasage.

16. Procédé selon l'une quelconque des revendications 12 à 14, dans lequel on fixe les plaques de noyau à la première plaque de surface courbe et à la seconde plaque de surface courbe au moyen d'un processus de brasage, lorsqu'une partie brasée du panneau courbe est plus haute, verticalement, que l'autre partie du panneau courbe adjacente à la partie brasée.

17. Procédé selon l'une quelconque des revendications 12 à 14, dans lequel on fixe les plaques de noyau à la première plaque de surface courbe (3) et à la seconde plaque de surface courbe (2) au moyen d'un processus de brasage lorsque la première plaque de surface courbe est disposée à un niveau plus élevé, verticalement, que la seconde plaque de surface courbe.

FIG. 1

EP 0 543 636 B1

# FIG. 2

# FIG. 3

# F I G. 4

# F I G. 5